# EUROPÄISCHE PATENTSCHRIFT

(11) **EP 0 802 395 B1**
(45) Veröffentlichungstag und Bekanntmachung des Hinweises auf die Patenterteilung: **23.01.2002**
(21) Anmeldenummer: 97102024.3
(22) Anmeldetag: 08.02.1997
(51) Int. Cl.: G01C 1/02

(54) **Antriebseinrichtung zum Ausrichten eines Theodoliten**
Driving arrangement for aligning a theodolite
Dispositif d'entraînement pour aligner un théodolite

(30) Priorität: 19.04.1996 DE 19615515
(43) Veröffentlichungstag der Anmeldung: 22.10.1997
(73) Patentinhaber: Leica Geosystems AG, 9435 Heerbrugg (CH)
(72) Erfinder: Ammann, Manfred, 6923 Lauterach (AT); Häle, Anton, 9443 Widnau (CH)
(74) Vertreter: Stamer, Harald, Dipl,-Phys.

(56) Entgegenhaltungen:
- WO-A-87/07366
- DE-A- 3 324 489
- US-A- 5 475 930

## Beschreibung

Die Erfindung betrifft eine Antriebseinrichtung zum Ausrichten eines Theodoliten, gemäß dem Oberbegriff des Patentanspruchs 1.

Moderne Theodolite, wie sie beispielsweise in der Druckschrift "Prospekt, Vermessungsinstrumente, Leica AG, Liste G1 916d, Schweiz 1993" beschrieben sind, zeichnen sich durch eine hohe Einstellgenauigkeit in horizontaler (Hz) und vertikaler (V) Richtung aus. Je nach Genauigkeitsklasse des jeweiligen Theodoliten können dabei Standardabweichungen von bis zu 0.3" erreicht werden. Dies entspricht einer Einstellgenauigkeit von <0.2 mm auf 100 m Entfernung.

Aus diesem Beispiel wird deutlich, daß diese Genauigkeiten nur mit extrem hohem feinmechanischem Aufwand erreichbar sind. Um dies zu gewährleisten ist man dazu übergegangen, den manuell zu bedienenden Stelltrieb, in der Regel ein Drehknopf, mit einem Encoder auszustatten und mit den Encodersignalen einen Einstellmotor anzusteuern. Die manuelle Ausrichtung des Theodoliten erfolgt somit nicht mehr über ein rein feinmechanisches Getriebe, sondern aus einer Kombination mit elektronischen und mechanischen Antriebselementen.

Aus WO 87/07366 ist ein motorisch angetriebener Theodolit bekannt. Auf einem Dreibein ist ein erster Rahmen befestigt, der die Schrittmotore zur horizontalen Ausrichtung des Fernrohres, sowie die Schalter zur Ansteuerung der Schrittmotoren enthält. Auf diesem Rahmen ist ein zweiter Rahmen drehbar gelagert, der das Fernrohr und die Schrittmotore zur vertikalen Ausrichtung trägt. Beide Rahmen sind durch Lager und Antriebsachsen miteinander mechanisch gekoppelt.

In der Praxis haben sich derartige Antriebe bewährt. Es hat sich jedoch herausgestellt, daß bei der Betätigung des Drehknopfes oder der Schalter Erschütterungen und Verwindungen auf den Theodoliten übertragen werden. Dadurch wird, insbesondere bei den Theodoliten der höchsten Genauigkeitsklasse, ein exaktes Anvisieren des Zieles erschwert.

Es ist daher Aufgabe der vorliegenden Erfindung, ausgehend von den bekannten Theodoliten, die Antriebe erschütterungs- und verwindungsfrei auszugestalten, um den Einfluß der Betätigungskräfte bei der Bedienung des Theodoliten zu minimieren.

Diese Aufgabe wird erfindungsgemäß durch die im kennzeichnenden Teil des Patentanspruches 1 angegebenen Merkmale gelöst. Weitere vorteilhafte Weiterbildungen der Erfindung sind Gegenstand der Unteransprüche.

Die Erfindung wird anhand eines Ausführungsbeispiels mit Hilfe der schematischen Zeichnung näher erläutert.

Es zeigen:
- Fig. 1 :: eine Schnittdarstellung des Theodoliten mit dem Drehteller
- Fig. 2 :: eine Ansicht des Theodoliten mit Drehteller und Keyboard

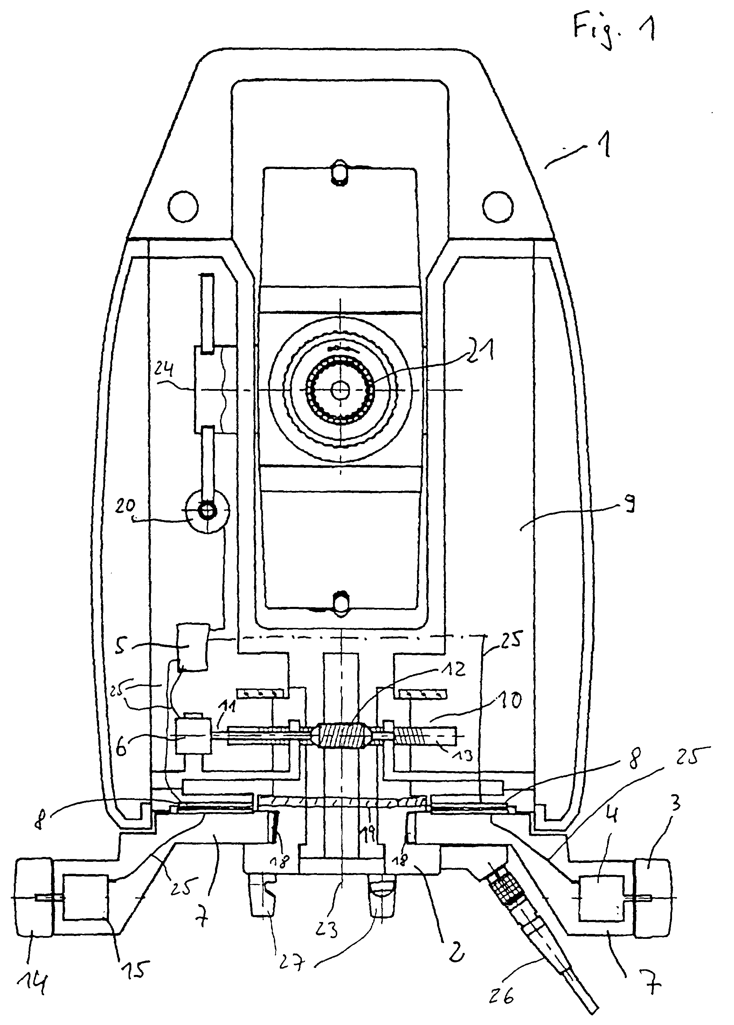

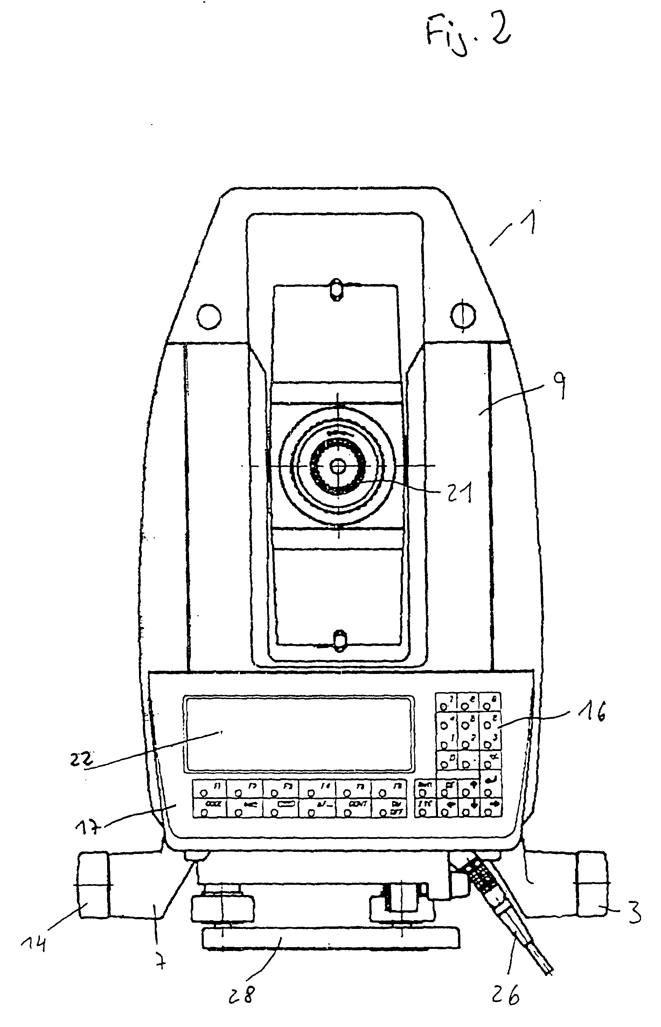

Die Figur 1 zeigt einen Theodoliten 1, der mit seinem Gehäuse 9 um eine Stehachse 23 in horizontaler Richtung (Hz) drehbar auf einem Theodolitenfuß 2 gelagert ist. Der Theodolitenfuß 2 weist Paßstifte 27 auf, über die der Theodolit 1 in bekannter Weise auf einem nicht mit dargestellten Stativ mit Dreifuß 28 (Figur 2) montiert wird.

Als Antrieb in Hz-Richtung ist ein Horizontal-Stellmotor 6 (Hz-Stellmotor) mit einem nachgeordneten Getriebe 10 vorgesehen, welches eine Rutschkupplung 11, eine Antriebsschnecke 13 sowie ein Schneckenrad 12 aufweist. Der Hz-Stellmotor 6 ist über elektrische Steuerleitungen 25 mit einer im Theodolitengehäuse angeordneten Steuerschaltung 5 verbunden.

Der Theodolit 1 weist ein in vertikaler Richtung (V) schwenkbares Fernrohr 21 auf, welches von einem Getriebe 24 und einem Vertikal-Stellmotor 20 (V-Stellmotor) angetrieben wird.

Am Theodolitenfuß 2 ist ein Drehteller 7 angeordnet, der zwei Bedienknöpfe 3 und 14 aufweist. Dem Bedienknopf 3 ist ein Hz-Encoder 4 und dem Bedienknopf 14 ein V-Encoder 15 zugeordnet. Mit dem Encoder 4 bzw. 15 werden die Drehbewegungen am zugehörigen Bedienknopf 3, 14 in elektrische Signale umwandelt und über die Steuerleitungen 25 der Steuerschaltung 5 zuführt. Über diese Drehknöpfe 3, 14 werden die beiden Stellmotoren 20 und 6 entsprechend angesteuert.

Um eine Drehbewegung des Theodolitengehäuses gegenüber dem Drehteller 7 bzw. dem Theodolitenfuß 2 unter Beibehaltung des elektrischen Kontaktes zwischen den Encodern 4, 15 und der Steuerschaltung 5 zu ermöglichen, ist zwischen dem Theodolitengehäuse 1 und dem Drehteller 7 ein elektrischer Kontakt 8 angeordnet. Dieser Kontakt 8 stellt die elektrische Verbindung zwischen den Encodern 4, 15 und der Steuerschaltung 6 her und ist als Schleifring ausgebildet.

Zur externen Steuerung des Theodoliten und zur Datenübertragung an einen nachgeordneten, nicht mit dargestellten Computer, ist am Theodolitenfuß 2 eine externe Steuerleitung 26 vorgesehen.

Zur Ausrichtung des Theodoliten 1 auf ein Ziel, wird dieser zunächst über die Paßstifte 27 in einem Dreifuß auf einem Stativ montiert und in bekannter Weise lotrecht ausgerichtet. Danach wird zur groben Zielausrichtung das Theodolitengehäuse 1 manuell in Zielrichtung gedreht. Damit diese manuelle Drehbewegung nicht von dem Hz-Stellmotor 6 und dem Getriebe 10 blockiert wird, ist zwischen dem Hz-Motor 6 und dem Getriebe 10 eine Rutschkupplung 11 vorgesehen.

Nach dieser groben Zielausrichtung, die auch für das Theodolitenfernrohr 21 in analoger Weise vorgenommen werden kann, erfolgt das genaue Anvisieren des Zieles über die Drehknöpfe 3 und 14. Die Drehbewegung an diesen Knöpfen 3, 14 wird über die Encoder 4, 15 in elektrische Signale umgewandelt und über die Steuerleitungen 25 und die Kontakte 8 der Steuerschaltung 5 zugeführt, welche die Stellmotoren 6 und 20 mit Strom beaufschlagt.

Der Theodolit 1 dreht dann in Zielrichtung und ist dabei mechanisch von den manuell zu bedienenden Bauteilen entkoppelt, so daß über die Bedienelemente keinerlei Erschütterungen bzw. Verwindungen auf das Theodolitengehäuse 9 übertragen werden können.

In einer weiteren Ausgestaltung der Erfindung ist der Drehteller 7 über eine Reibungsbremse 18 drehbar am Theodolitenfuß 2 angeordnet. Ferner ist zwischen dem Theodolitengehäuse 9 und dem Drehteller 7 eine codierte Scheibe 19 vorgesehen, über die die Stellung des Drehtellers 7 zum Theodolitengehäuse 9 eindeutig bestimmbar ist.

Mit diesen Maßnahmen wird die grobe Zielausrichtung des Theodoliten vereinfacht. Durch eine Drehung des Tellers 7 in Zielrichtung, wird von der codierten Scheibe 19 die Lageänderung des Theodolitengehäuses 9 zum Drehteller 7 registriert. Über die Steuerschaltung 5 wird dann der Hz-Stellmotor 6 für die Horizontalverstellung so lange mit Strom beaufschlagt, bis die definierte Ausgangsstellung des Theodolitengehäuses 9 zum Drehteller 7 wieder übereinstimmt. Das Theodolitengehäuse 2 wird so der Stellung des Drehtellers 7 nachgeführt. Damit entfällt die o.a. manuelle Ausrichtung des Theodoliten auf das anzuvisierende Ziel.

Die Figur 2 zeigt eine Ansicht des Theodoliten 1, der auf einem Dreifuß 28 montiert ist. Der Theodolit 1 ist mit einem Keyboard 17 ausgestattet, welches am Drehteller 7 befestigt ist. Das Keyboard 17 weist eine Anzeigevorrichtung 22 sowie mehrere als Tasten ausgebildete Bedienelemente 16 auf. Über diese Bedienelemente 16 können beispielsweise die Werte der gemessenen Winkel und gegebenenfalls der Entfernung abgespeichert werden. Über die externe Steuerleitung 26 können diese Werte an einen angeschlossenen Rechner übertragen werden.

Mit dem Gegenstand der vorliegenden Erfindung werden sämtliche manuell zu bedienenden Elemente vom Theodolitengehäuse 2 mechanisch entkoppelt. Dadurch wird es möglich, die mit dem Theodoliten erreichbare Meßgenauigkeit auch beim manuellen Anvisieren des Zieles auf einfache Art und Weise zu erreichen.

Es liegt auch im Rahmen der Erfindung, den Theodoliten nur mit einem Horizontal-Stellmotor oder nur mit einem Vertikal-Stellmotor auszustatten. Bei Theodoliten, die zusätzlich mit einer Entfernungsmesseinrichtung ausgestattet sind (Totalstationen), kann auch ein Stellmotor für die Fokuseinstellung des Fernrohres vorgesehen sein, der analog zu den Hz-/V-Stellmotoren über eine Encoder/Bedienknopfkombination am Drehteller betätigt wird.

### Bezugszeichenliste

- 1-: Theodolit
- 2-: Theodolitenfuß
- 3-: Bedienknopf
- 4-: Horizontal-Encoder (Hz-Encoder)
- 5-: Steuerschaltung
- 6-: Horizontal-Stellmotor (Hz-Stellmotor)
- 7-: Drehteller
- 8-: elektrischer Kontakt
- 9-: Theodolitengehäuse
- 10-: Getriebe
- 11 -: Rutschkupplung
- 12-: Schneckenrad
- 13-: Schnecke
- 14-: Bedienknopf
- 15-: Vertikal-Encoder (V-Encoder)
- 16-: Bedienelemente
- 17 -: Keyboard
- 18 -: Reibungsbremse
- 19-: codierte Scheibe
- 20-: Vertikal-Stellmotor (V-Stellmotor)
- 21 -: Theodolitenfernrohr
- 22 -: Anzeigeeinrichtung
- 23 -: Stehachse
- 24 -: Getriebe
- 25 -: Steuerleitungen
- 26 -: externe Daten/Steuerleitung
- 27 -: Paßstifte
- 28 -: Dreifuß

## Patentansprüche

1. Antriebseinrichtung zum Ausrichten eines Theodoliten (1) auf ein Ziel, bei der der Theodolit (1) in horizontaler Richtung drehbar auf einem Theodolitenfuß (2) gelagert ist, mit einem Bedienknopf (3) und einem damit verbundenen Encoder (4), wobei der Encoder (4) Steuersignale entsprechend der Drehbewegung am Bedienknopf (3) an eine nachgeordnete Steuerschaltung (5) abgibt und diese einen Stellmotor (6) ansteuert, **dadurch gekennzeichnet, daß** am Theodolitenfuß (2) ein horizontaler, unabhängig vom Theodoliten (1) bewegbarer Drehteller (7) angeordnet ist, der den Bedienknopf (3) trägt und zwischen dem Theodoliten (1) und dem Drehteller (7) ein elektrischer Kontakt (8) vorgesehen ist, der die elektrische Verbindung zwischen dem Encoder (4) und dem Stellmotor (6) gewährleistet.

2. Antriebseinrichtung nach Anspruch 1, **dadurch gekennzeichnet, daß** der Stellmotor (6) im Theodolitengehäuse (9) angeordnet ist und über ein Getriebe (10) und eine Rutschkupplung (11) mit dem Theodolitenfuß (2) verbunden ist.

3. Antriebseinrichtung nach Anspruch 2, **dadurch gekennzeichnet, daß** das Getriebe (10) ein Schneckenrad (12) und eine Schecke (13) aufweist.

4. Antriebseinrichtung nach einem der Ansprüche 1 - 3 , **dadurch gekennzeichnet, daß** der elektrische Kontakt (8) als Schleifring ausgebildet ist.

5. Antriebseinrichtung nach einem der Ansprüche 1 - 4 , **dadurch gekennzeichnet, daß** der Stellmotor (6) als Antrieb für die Horizontalverstellung des Theodoliten (1) ausgebildet ist.

6. Antriebseinrichtung nach einem der Ansprüche 1 - 4 , **dadurch gekennzeichnet, daß** ein Vertikal-Stellmotor (20) als Antrieb für die Vertikalverstellung des Theodolitenfemrohres (21) ausgebildet ist.

7. Antriebseinrichtung nach Ansprüche 5 und 6, **dadurch gekennzeichnet, daß** am Drehteller (7) für den Horizontal-Stellmotor (6) und den Vertikal-Stellmotor (20) ein separater Bedienknopf (3, 14) vorgesehen ist.

8. Antriebseinrichtung nach mindestens einem der vorherigen Ansprüche, **dadurch gekennzeichnet, daß** am Drehteller (7) zusätzliche Bedienelemente (16) zur Steuerung des Theodoliten (1) und/oder Speicherung von Daten angeordnet sind.

9. Antriebseinrichtung nach Anspruch 8, **dadurch gekennzeichnet, daß** die Bedienelemente (16) auf einem Keyboard (17) zusammengefaßt sind.

10. Antriebseinrichtung nach Anspruch 9, **dadurch gekennzeichnet, daß** das Keyboard (17) eine Anzeigeeinrichtung (22) aufweist.

11. Antriebseinrichtung nach mindestens einem der vorherigen Ansprüche, **dadurch gekennzeichnet, daß** zwischen dem Drehteller (7) und dem Theodolitenfuß (2) eine Reibungsbremse (18) vorgesehen ist.

12. Antriebseinrichtung nach mindestens einem der vorherigen Ansprüche, **dadurch gekennzeichnet, daß** zwischen dem Drehteller (7) und dem Theodoliten (1) eine codierte Scheibe (19) angeordnet ist, über die die Stellung des Theodoliten (1) zum Drehteller (7) ermittelbar ist.

13. Antriebseinrichtung nach Anspruch 12, **dadurch gekennzeichnet, daß** zur manuellen Grobausrichtung des Theodoliten (1) auf das Ziel, der Drehteller (7) in Zielrichtung drehbar gelagert ist und der Theodolit (1) über den Horizontal-Stellmotor (6) motorisch nachgeführt wird.

## Claims

1. Driving arrangement for aligning a theodolite (1) with a target, in which the theodolite (1) is mounted, so as to be rotatable in the horizontal direction, on a theodolite base (2) comprising a control knob (3) and an encoder (4) associated therewith, the encoder (4) outputting control signals corresponding to the rotational movement of the control knob (3) to a downstream control circuit (5) and the latter actuating a servo motor (6), **characterized in that** a horizontal turntable (7) which is movable independently of the theodolite (1) and carries the control knob (3) is arranged on the theodolite base (2) and an electrical contact (8) which ensures the electrical connection between the encoder (4) and the servo motor (6) is provided between the theodolite (1) and the turntable (7).

2. Driving arrangement according to Claim 1, **characterized in that** the servo motor (6) is arranged in the theodolite housing (9) and is connected to the theodolite base (2) via a gear (10) and a friction clutch (11).

3. Driving arrangement according to Claim 2, **characterized in that** the gear (10) has a worm gear (12) and a worm (13).

4. Driving arrangement according to any of Claims 1-3, **characterized in that** the electrical contact (8) is in the form of a slip ring.

5. Driving arrangement according to any of Claims 1-4, **characterized in that** the servo motor (6) is in the form of a drive for the horizontal adjustment of the theodolite (1).

6. Driving arrangement according to any of Claims 1-4, **characterized in that** a vertical servo motor (20) is in the form of a drive for vertical adjustment of the theodolite telescope (21).

7. Driving arrangement according to Claims 5 and 6, **characterized in that** separate control knobs (3, 14) are provided on the turntable (7) for the horizontal servo motor (6) and the vertical servo motor (20).

8. Driving arrangement according to at least one of the preceding Claims, **characterized in that** additional controls (16) for controlling the theodolite (1) and/or storing data are arranged on the turntable (7).

9. Driving arrangement according to Claim 8, **characterized in that** the controls (16) are combined on a keyboard (17).

10. Driving arrangement according to Claim 9, **characterized in that** the keyboard (17) has a display means (22).

11. Driving arrangement according to at least one of the preceding Claims, **characterized in that** a friction brake (18) is provided between the turntable (7) and the theodolite base (2).

12. Driving arrangement according to at least one of the preceding Claims, **characterized in that** a coded disc (19), by means of which the position of the theodolite (1) relative to the turntable (7) can be determined, is arranged between the turntable (7) and the theodolite (1).

13. Driving arrangement according to Claim 12, **characterized in that**, for coarse manual alignment of the theodolite (1) with the target, the turntable (7) is mounted so as to be rotatable in the target direction, and the theodolite (1) is moved correspondingly under motor power by means of the horizontal servo motor (6).

## Revendications

1. Dispositif d'entraînement pour aligner un théodolite (1) sur une cible, pour lequel le théodolite (1) est monté de façon à pouvoir tourner en direction horizontale, sur un pied de théodolite (2), avec un bouton de manoeuvre (3) et un codeur (4) lui étant lié, le codeur (4) fournissant des signaux de commande, de manière correspondante au mouvement rotatif effectué sur le bouton de manoeuvre (3), à un circuit de commande (5) installé en aval, et celui-ci commandant un servomoteur (6), **caractérisé en ce que**, sur le pied de théodolite (2), est disposé un plateau rotatif (7) horizontal, déplaçable indépendamment du théodolite (1), portant le bouton de manoeuvre (3) et, entre le théodolite (1) et le plateau rotatif (7), étant prévu un contact électrique (8) qui assure la liaison électrique entre le codeur (4) et le servomoteur (6).

2. Dispositif d'entraînement selon la revendication 1, **caractérisé en ce que** le servomoteur (6) est disposé dans le boîtier de théodolite (9) et est relié au pied de théodolite (2), par l'intermédiaire d'une transmission (10) et d'un embrayage à friction (11).

3. Dispositif d'entraînement selon la revendication 2, **caractérisé en ce que** la transmission (10) présente une roue à vis (12) et une vis (13).

4. Dispositif d'entraînement selon l'une des revendications 1 à 3, **caractérisé en ce que** le contact électrique (8) est réalisé sous la forme de bagues collectrices à frottement.

5. Dispositif d'entraînement selon l'une des revendications 1 à 4, **caractérisé en ce que** le servomoteur (6) est réalisé à titre d'entraînement pour le mouvement de réglage horizontal du théodolite (1).

6. Dispositif d'entraînement selon l'une des revendications 1 à 4, **caractérisé en ce qu'**un servomoteur vertical (20) est réalisé à titre d'entraînement pour le mouvement de réglage vertical de la lunette de visée de théodolite (21).

7. Dispositif d'entraînement selon les revendications 5 et 6, **caractérisé en ce qu'**un bouton de manoeuvre (3, 14) séparé est prévu sur le plateau tournant (7), pour le servomoteur horizontal (6) et le servomoteur vertical (20).

8. Dispositif d'entraînement selon au moins l'une des revendications précédentes, **caractérisé en ce que**, sur le plateau tournant (7), sont disposés des éléments de manoeuvre (16) supplémentaires, pour la commande du théodolite (1) et/ou la mémorisation de données.

9. Dispositif d'entraînement selon la revendication 8, **caractérisé en ce que** les éléments de manoeuvre (16) sont regroupés sur un pavé numérique (17).

10. Dispositif d'entraînement selon la revendication 9, **caractérisé en ce que** le pavé numérique (17) présente un dispositif d'affichage (22).

11. Dispositif d'entraînement selon au moins l'une des revendications précédentes, **caractérisé en ce qu'**entre le plateau tournant (7) et le pied de théodolite (2) est prévu un frein à friction (18).

12. Dispositif d'entraînement selon au moins l'une des revendications précédentes, **caractérisé en ce qu'**entre le plateau tournant (7) et le théodolite (1) est disposé un disque codé (19), par l'intermédiaire duquel la position du théodolite (1) par rapport au plateau tournant (7) peut être déterminée.

13. Dispositif d'entraînement selon la revendication 12, **caractérisé en ce que**, pour effectuer l'alignement grossier, manuel, du théodolite (1) sur la cible, le plateau tournant (7) est monté à rotation dans la direction de la cible et le théodolite (1) est soumis à une manoeuvre de poursuite motorisée, par l'intermédiaire du servomoteur horizontal (6).
